# EUROPÄISCHE PATENTANMELDUNG

(11) **EP 1 768 253 A2**
(43) Veröffentlichungstag der Anmeldung: **28.03.2007**
(21) Anmeldenummer: 06116144.4
(22) Anmeldetag: 27.06.2006
(51) Int. Cl.: H02P 25/32

(54) **Verfahren zur Strommessung mit einem Shunt und Vorrichtung zur Strommessung**

(30) Priorität: 27.07.2005 DE 102005035074
(71) Anmelder: ROBERT BOSCH GMBH, 70442 Stuttgart (DE)
(72) Erfinder: Sutter, Joerg, 76571, Gaggenau (DE); Frey, Heiko, 76476, Bischweier (DE); Jaervelaeinen, Tero, 77815, Buehl (DE); Schmitt, Gilles, 67100, Strasbourg (FR)

(57) **Zusammenfassung**

Die Erfindung betrifft ein Verfahren zur Bestimmung mindestens eines Phasenstroms (I_{A}, I_{B}, l_{C}) bei einer elektrischen Maschine (10) mit einer Maschinensteuervorrichtung (12), insbesondere für ein Kraftfahrzeug, aufweisend mehrere jeweils einer Phase zugeordnete Schaltanordnungen (14) mit jeweils mindestens einem Schaltelement (16), wobei die Maschinensteuervorrichtung (12) mittels Betriebsschaltvorgängen die Schaltanordnungen (14) derart schaltet, dass zumindest zeitweise mindestens ein Phasenstrom (I_{A}, I_{B}, I_{C}) zur Maschine (10) geleitet wird, um den Betrieb der Maschine (10) zu bewirken, und eine zugehörige Vorrichtung. Erfindungsgemäß wird neben den den Betrieb der Maschine (10) bewirkenden Betriebsschaltvorgängen mindestens ein weiterer der Bestimmung des Phasenstroms dienender Messschaltvorgang mittels mindestens einer der Schaltanordnungen (14) durchgeführt, wobei für den Messschaltvorgang zur Erzeugung eines den zu messenden Phasenstrom bestimmenden Testimpulssignals (DC_{Test}) aktuelle Tastverhältnissignale (DC_{A}, DC_{B}, DC_{C}) ausgewertet und miteinander verglichen werden.

## Beschreibung

Die Erfindung betrifft ein Verfahren zur Bestimmung mindestens eines Phasenstroms bei einer elektrischen sterngeschalteten Wechselstrommaschine, insbesondere für ein Kraftfahrzeug, gemäß dem Oberbegriff des Anspruchs 1, sowie eine zugehörige Vorrichtung gemäß dem Oberbegriff des Anspruchs 10.

### Stand der Technik

Beim Betrieb von elektrischen Maschinen ist es oftmals gewünscht oder erforderlich, mindestens einen Phasenstrom zu bestimmen. Dies gilt insbesondere für Anwendungen in der Kraftfahrzeugtechnik, bei denen eine elektrische Maschine getaktet angesteuert wird, bevorzugt mittels einer pulsweitenmodulierten (PWM-) Spannung. Die Information über den mindestens einen Phasenstrom dient als ein Eingabeparameter in Steuerungs- oder Regelungskreise, die beispielsweise einer Überwachung oder einer Abschaltung bei Überschreitung eines Grenzwerts dienen. Zur Messung des Phasenstroms ist es bekannt, einen niederohmigen Strommessshunt (Shunt) einzusetzen, der im Stromkreis des Phasenstroms angeordnet ist. Die über den Shunt abfallende Spannung ist proportional zum Phasenstrom und wird über entsprechende Kontakte abgegriffen. Das Signal dieses Spannungsabfalls wird weiterverarbeitet (beispielsweise verstärkt oder digitalisiert) und ausgewertet. Für das Anwendungsbeispiel einer dreiphasigen Maschine ergibt sich, dass stets mindestens zwei Phasenströme bestimmt werden müssen - der dritte Strom ergibt sich unmittelbar aus den zwei bekannten Strömen. Um dies zu realisieren, muss ein Shunt in jeder Phase der elektrischen Maschine angeordnet sein. Im Zusammenspiel mit den benötigten Vorrichtungen zur Signalaufbereitung, entstehen durch diese Lösung hohe Kosten und ein großer Platzbedarf. Zudem ist es bekannt, mit Hilfe eines digitalen Signalprozessors (DSP) die Phasenströme mit genau einem Shunt zu messen, der in der Zusammenführung der Phasen angeordnet ist (Application note von Texas Instruments, Three Phase Current Measurements Using a Single Line Resistor on the TMS320F240, Literature number: BPRA077, May 1998). Das Verfahren hat jedoch den Nachteil, dass die Messung asynchron mit der Taktperiode ist. Der Zeitpunkt der Messung muss für jede Taktperiode neu berechnet werden, und die Tastverhältnisse müssen auf sehr komplizierte Weise angepasst beziehungsweise korrigiert werden. Dadurch entsteht - alleine aufgrund der Strommessung - ein hoher Rechenaufwand, der sich nur mit spezialisierten Mikrocontrollern, insbesondere dem vorgeschlagenen digitalen Signalprozessor, bewältigen lässt. Es verbleibt daher, insbesondere für Anwendungen in der Kraftfahrzeugtechnik, der Wunsch nach einer einfacheren und kostengünstigeren Lösung.

### Vorteile der Erfindung

Für ein Verfahren zur Bestimmung mindestens eines Phasenstroms bei einer elektrischen sterngeschalteten Wechselstrommaschine mit einer Maschinensteuervorrichtung, insbesondere für ein Kraftfahrzeug, aufweisend mehrere jeweils einer Phase zugeordnete Schaltanordnungen mit jeweils mindestens einem Schaltelement, wobei die Maschinensteuervorrichtung mittels Betriebsschaltvorgängen die Schaltanordnungen derart schaltet, dass zumindest zeitweise mindestens ein Phasenstrom zur Maschine geleitet wird, um den Betrieb der Maschine zu bewirken, wird erfindungsgemäß vorgeschlagen, dass neben den den Betrieb der Maschine bewirkenden Betriebsschaltvorgängen mindestens ein weiterer der Bestimmung des Phasenstroms dienender Messschaltvorgang mittels mindestens einer der Schaltanordnungen durchgeführt wird, wobei für den Messschaltvorgang zur Erzeugung eines den zu messenden Phasenstrom bestimmenden Testimpulssignals aktuelle Tastverhältnissignale ausgewertet und miteinander verglichen werden. Die Maschinensteuervorrichtung schaltet also eine der Maschine zugeordnete Spannungsquelle mittels der Schaltanordnungen derart auf die einzelnen Phasen der Maschine, dass der Betrieb der Maschine bewirkt wird. Zur Durchführung der Phasenstrommessung wird mittels mindestens einer Schaltanordnung ein Messschaltvorgang durchgeführt. Das heißt, zur Phasenstrommessung stehen nicht nur die bekannten Betriebsschaltvorgänge und Schaltzustände zur Verfügung, sondern es wird ein zusätzlicher Messschaltvorgang erzeugt. Es entsteht dadurch eine besondere Flexibilität hinsichtlich der zeitlichen Positionierung der Phasenstrommessung. Das erfindungsgemäße Verfahren ermöglicht eine Pulweitenmodulation einer sinusbestromten Wechselstrommaschine mit nur einem Shunt, wobei in vorteilhafter Weise ein erweiterter Ausgangsspannungsbereich, beispielsweise eines Wechselrichters, benutzt werden kann und damit die Phasenstrommessung immer in zwei Phasen möglich ist.

Bei der Auswertung der Tastverhältnissignale werden beispielsweise ein minimales Tastverhältnissignal und/oder ein maximales Tastverhältnissignal bestimmt.

Zur Bestimmung des minimalen Tastverhältnissignals und/oder des maximalen Tastverhältnissignals werden die Tastverhältnissignale nach ihrer Größe angeordnet, wobei in Abhängigkeit von der sich ergebenden Anordnungsreihenfolge verschiedene Zustände erkannt werden können. Bei einer dreiphasigen Ausführung der Wechselstrommaschinen können nach der größenmäßigen Anordnung der drei Tastverhältnissignale beispielsweise sechs gültige Zustände unterschieden werden. Bei einem ersten Zustand ist ein drittes Tastverhältnissignal größer als ein zweites und ein erstes Tastverhältnissignal, wobei das zweite Tastverhältnissignal größer als das erste Tastverhältnissignal ist. Im ersten Zustand entspricht das erste Tastverhältnissignal dem minimalen Tastverhältnissignal und das dritte Tastverhältnissignal entspricht dem maximalen Tastverhältnissignal. Bei einem zweiten Zustand ist das zweite Tastverhältnissignal größer als das dritte und das erste Tastverhältnissignal, wobei das dritte Tastverhältnissignal größer als das erste Tastverhältnissignal ist. Im zweiten Zustand entspricht das erste Tastverhältnissignal dem minimalen Tastverhältnissignal und das zweite Tastverhältnissignal entspricht dem maximalen Tastverhältnissignal. Bei einem dritten Zustand ist das zweite Tastverhältnissignal größer als das dritte und das erste Tastverhältnissignal, wobei das erste Tastverhältnissignal größer als das dritte Tastverhältnissignal ist. Im dritten Zustand entspricht das dritte Tastverhältnissignal dem minimalen Tastverhältnissignal und das zweite Tastverhältnissignal entspricht dem maximalen Tastverhältnissignal. Bei einem vierten Zustand ist das dritte Tastverhältnissignal größer als das zweite und das erste Tastverhältnissignal, wobei das erste Tastverhältnissignal größer als das zweite Tastverhältnissignal ist. Im vierten Zustand entspricht das zweite Tastverhältnissignal dem minimalen Tastverhältnissignal und das dritte Tastverhältnissignal entspricht dem maximalen Tastverhältnissignal. Bei einem fünften Zustand ist das erste Tastverhältnissignal größer als das zweite und das dritte Tastverhältnissignal, wobei das dritte Tastverhältnissignal größer als das zweite Tastverhältnissignal ist. Im fünften Zustand entspricht das zweite Tastverhältnissignal dem minimalen Tastverhältnissignal und das erste Tastverhältnissignal entspricht dem maximalen Tastverhältnissignal. Bei einem sechsten Zustand ist das erste Tastverhältnissignal größer als das zweite und das dritte Tastverhältnissignal, wobei das zweite Tastverhältnissignal größer als das dritte Tastverhältnissignal ist. Im sechsten Zustand entspricht das dritte Tastverhältnissignal dem minimalen Tastverhältnissignal und das erste Tastverhältnissignal entspricht dem maximalen Tastverhältnissignal.

Gemäß einer bevorzugten Ausgestaltung der Erfindung wird das minimale Tastverhältnissignal mit einem vorgegebenen Grenzwert verglichen, wobei das ermittelte minimale Tastverhältnissignal auf einen vorgegebenen Wert, vorzugsweise Null, reduziert wird und die anderen Tastverhältnissignale um den vorgegebenen Grenzwert reduziert werden, wenn das minimale Tastverhältnissignal den vorgegebenen Grenzwert unterschreitet. Dadurch wird ein Sternpunkt der Wechselstrommaschine so verschoben, dass mehr Spannung über eine Phase zur Verfügung steht.

Da ein minimales Tastverhältnissignal mit einem Wert, welcher kleiner als der Wert des Testimpulssignals oder als ein doppelter Wert eines minimalen Tastverhältnisses ist, nicht für eine Phasenstrommessung mit einer Kompensation des Testimpulssignals geeignet ist, kann der vorgegebene Grenzwert in vorteilhafter Weise auf den Wert des Testimpulssignals und/oder auf den doppelten Wert des minimalen Tastverhältnisses gesetzt werden.

In weiterer Ausgestaltung des erfindungsgemäßen Verfahrens wird der zu messende Phasenstrom in Abhängigkeit vom vorherigen Phasenstrom und vom erkannten Zustand bestimmt.

Nach der Bestimmung des zu messenden Phasenstroms werden die kompensierten Tastverhältnissignale zu Ansteuerung eines Leistungsverstärkers der Wechselstrom maschine berechnet und ausgegeben.

Ferner betrifft die Erfindung eine Vorrichtung zur Bestimmung mindestens eines Phasenstroms bei einer elektrischen sterngeschalteten Wechselstrommaschine mit einer Maschinensteuervorrichtung, insbesondere für ein Kraftfahrzeug, aufweisend mehrere jeweils einer Phase zugeordnete Schaltanordnungen mit jeweils mindestens einem Schaltelement, wobei die Maschinensteuervorrichtung mittels Betriebsschaltvorgängen die Schaltanordnungen derart schaltet, dass zumindest zeitweise mindestens ein Phasenstrom zur Maschine geleitet wird, um den Betrieb der Maschine zu bewirken, wobei die Vorrichtung eine Messeinrichtung aufweist und eine neben den den Betrieb der Maschine bewirkenden Betriebsschaltvorgängen mindestens einen der Bestimmung des Phasenstroms dienenden Messschaltvorgang durchführende Messschaltvorrichtung vorgesehen ist, welche für den Messschaltvorgang zur Erzeugung eines den zu messenden Phasenstrom bestimmenden Testimpulssignals aktuelle Tastverhältnissignale auswertet und miteinander vergleicht.

Es ist vorteilhaft, wenn ein Messelement der Messeinrichtung in einer Zusammenführung aller Phasen angeordnet ist. Es ist demnach nicht mehr erforderlich, Messelemente für jede Phase vorzusehen.

Vorteilhafterweise weist die Messeinrichtung einen Messwiderstand, insbesondere einen Shunt, auf. Dadurch lässt sich die Messeinrichtung preiswert gestalten.

Bei einer Weiterbildung der Erfindung weisen die Schaltanordnungen jeweils zwei Schaltelemente auf. Diese Schaltelemente sind dabei bevorzugt als Halbleiterschaltelemente, insbesondere Transistoren, ausgebildet. Dabei sind die Schaltelemente insbesondere in Reihe angeordnet, wobei zwischen den Schaltelementen ein Abzweig in eine Phase der elektrischen Maschine angeordnet ist. Im Zusammenspiel mit mindestens einer weiteren Schaltanordnung lassen sich so eine oder mehrere Brückenschaltungen realisieren, mittels derer die gewünschte Bestromung der Maschine bewirkt wird.

Bei einer vorteilhaften Ausgestaltung der Erfindung wechseln die Schaltelemente ihre Schaltzustände gegenläufig zueinander. Dadurch kann sichergestellt werden, dass der zugeführte Strom stets durch die Wicklungen der Maschine fließt, und nicht aufgrund einer durchgeschalteten Schaltanordnung ein Kurzschluss entsteht. Es können dabei zudem so genannte Totzeiten vorgesehen werden, die bei einem Wechsel des Schaltzustands verhindern, dass das eine Schaltelement durchschaltet, insbesondere als Transistor leitend wird, bevor das andere Schaltelement öffnet, insbesondere als Transistor sperrt. Dadurch wird verhindert, dass kurzzeitig ein Kurzschlussstrom entsteht.

### Zeichnungen

Die Erfindung wird nun anhand von Ausführungsbeispielen näher erläutert. Dabei zeigen:
- Figur 1: eine Vorrichtung zur Bestimmung mindestens eines Phasenstroms,
- Figur 2: eine Detailansicht der Vorrichtung gemäß Figur 1,
- Figur 3: einen zeitlichen Ablauf der Schaltvorgänge der Transistoren T1 bis T6 der Vorrichtung gemäß Fig. 2,
- Figur 4: einen zeitlichen Verlauf von PWM-Signalen innerhalb eines Tastverhältnisbereichs zwischen MinDC und MaxDC, und
- Figur 5: einen zeitlichen Verlauf von PWM-Signalen außerhalb des Tastverhältnisbereichs.

### Beschreibung des Ausführungsbeispiels

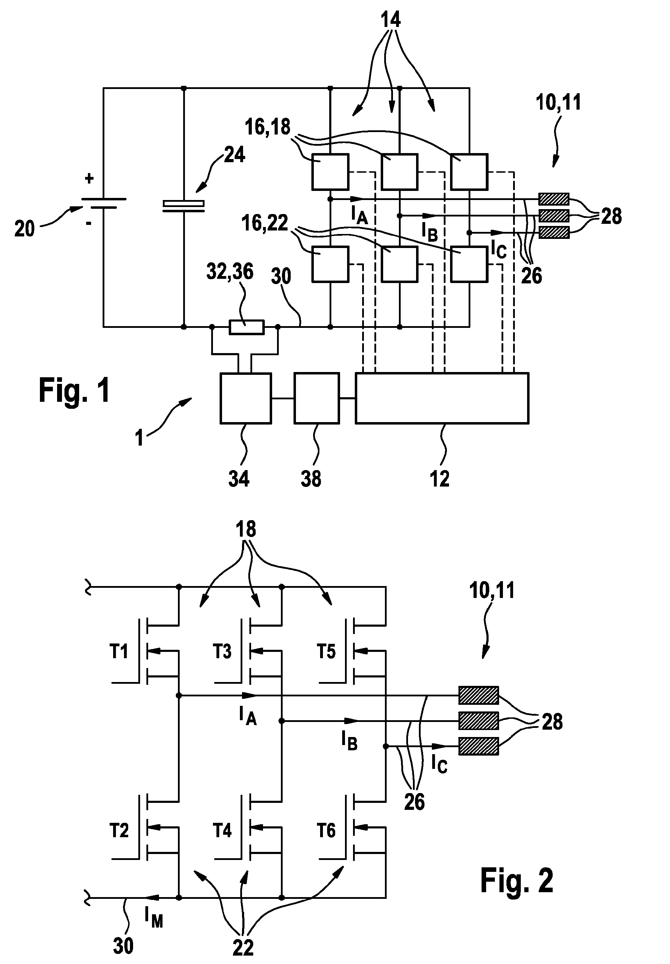

Figur 1 zeigt eine Vorrichtung 1 zur Bestimmung mindestens eines Phasenstroms I_{A}, I_{B}, I_{C} bei einer elektrischen Maschine 10 mit einer Maschinensteuervorrichtung 12 aufweisend mehrere jeweils einer Phase zugeordnete Schaltanordnungen 14 mit jeweils zwei Schaltelementen 16. Die elektrische Maschine 10 ist hier als Wechselstrommotor 11 in Sternschaltung ausgebildet. In jeder Schaltanordnung 14 ist ein Schaltelement 16 als High-Side-Schaltelement 18 einem positiven Spannungspotential einer Spannungsquelle 20 zugeordnet und das andere Schaltelement 16 als Low-Side-Schaltelement 22 einem negativen Potential der Spannungsquelle 20 zugeordnet. Parallel zur Spannungsquelle 20 ist ein Elektrolytkondensator 24 geschaltet. Zwischen dem High-Side-Schaltelement 18 und dem Low-Side-Schaltelement 22 ist jeweils ein Abzweig 26 angeordnet, an den jeweils eine Motorwicklung 28 angeschlossen ist. Die Schaltanordnungen 14 werden von der Maschinensteuervorrichtung 12 mittels Betriebsschaltvorgängen derart geschaltet, dass zumindest zeitweise mindestens ein Phasenstrom I_{A}, I_{B}, I_{C} zur Maschine 10 geleitet wird, um den Betrieb der Maschine 10 zu bewirken. Die Schaltelemente 16 jeder Schaltanordnung 14 werden dabei gegenläufig zueinander geschaltet, das heißt es ist stets eines der Schaltelemente 16 geöffnet, um das Auftreten eines Kurzschlussstroms durch eine Schaltanordnung 14 zu verhindern.

In der Zusammenführungsleitung 30 ist ein Messelement 32 einer Messeinrichtung 34 angeordnet. Das Messelement 32 ist hier als Messwiderstand (Shunt) 36 ausgeführt. Die Messeinrichtung 34 greift den Spannungsabfall über den Shunt 36 ab und ermittelt daraus den durch die Zusammenführungsleitung 30 fließenden Strom. Der Maschinensteuervorrichtung 12 und der Messeinrichtung 34 ist eine Messschaltvorrichtung 38 zugeordnet. Während die Maschinensteuervorrichtung 12 die den Betrieb der Maschine bewirkenden Betriebsschaltvorgänge steuert oder regelt, dient die Messschaltvorrichtung 38 der Ausführung eines zusätzlichen Messschaltvorgangs. Es sei an dieser Stelle darauf hingewiesen, dass die genannten Komponenten zwar einzeln dargestellt sind, dass diese aber selbstverständlich auch teilweise beziehungsweise vollständig integriert sein können.

Während des Betriebs stellt sich das Zusammenspiel zwischen Maschinensteuervorrichtung 12 und Messschaltvorrichtung 38 wie folgt dar. Die Maschinensteuervorrichtung 12 löst in den Schaltanordnungen 14 Schaltvorgänge aus, die den gewünschten Betrieb der elektrischen Maschine 10 bewirken. Um nun die Messung eines Phasenstroms I_{A}, I_{B}, I_{C} durchzuführen, wird zunächst von der Messschaltvorrichtung 38 der gewünschte Zeitpunkt der Messung ermittelt. Die dazu benötigte Information kann auf einfache Weise direkt von der Maschinensteuervorrichtung 12 bereitgestellt werden. Soll die Strommessung vorgenommen werden, das heißt der Messschaltvorgang durchgeführt werden, sendet die Messschaltvorrichtung 38 ein Signal an die Maschinensteuervorrichtung 12. Aufgrund dieses Signals führt die Maschinensteuervorrichtung 12 einen Schaltvorgang in mindestens einer der Schaltanordnungen 14 durch. Wie später noch näher erläutert wird, führt dies dazu, dass in der Zusammenführungsleitung 30 ein Strom fließt, der einen unmittelbaren Rückschluss auf einen der Phasenströme I_{A}, I_{B}, I_{C} ermöglicht. Während des Messschaltvorgangs sendet die Messschaltvorrichtung 38 ein Signal an die Messeinrichtung 34 zur Strommessung beziehungsweise fragt einen ermittelten Strommesswert ab. Der Messschaltvorgang wird dann beendet, indem die für den Messschaltvorgang erfolgte Schaltzustandsänderung in der mindestens einen Schaltanordnung rückgängig gemacht wird. Das heißt, nach Beendigung des Messschaltvorgangs sind die Schaltzustände aller Schaltanordnungen wieder so, wie unmittelbar vor dem Einleiten des Messschaltvorgangs.

Anhand der Figur 2, die einen Detailausschnitt aus der Figur 1 darstellt, sollen nun die Betriebsschaltvorgänge näher erläutert werden, die von der Maschinensteuervorrichtung 12 ausgelöst werden. Die High-Side-Elemente 18 der Schaltelemente 14 sind hier die Transistoren T1, T3, T5 und die Low-Side-Schaltelemente 22 sind die Transistoren T2, T4, T6. Ausgehend von einem Zustand, in dem die Transistoren T1, T3, T5 sperrend und die Transistoren T2, T4, T6 leitend geschaltet sind, das heißt es fließt kein Strom durch die elektrische Maschine 10, ist in diesem Ausführungsbeispiel folgende Schaltreihenfolge vorgesehen, wobei jeweils die Schaltzustände der nicht genannten Transistoren unverändert bleiben:
S1: T5 leitend und T6 sperrend
S2: T3 leitend und T4 sperrend
S3: T1 leitend und T2 sperrend
S4: T1 sperrend und T2 leitend
S5: T3 sperrend und T4 leitend
S6: T5 sperrend und T6 leitend
S7: Wiederholung ab S1

Da die Summe aller Ströme in der elektrischen Maschine 10 null ist, ergibt sich die Beziehung I_{A} + I_{B} + I_{C} = 0. Dadurch lassen sich hinsichtlich der Phasenströme I_{A}, I_{B}, I_{C} - es werden nach wie vor nur die Betriebsschaltvorgänge betrachtet - aufgrund des in der Zusammenführungsleitung 30 fließenden Stroms I_{M} folgende Rückschlüsse ziehen:
S1: I_{M} = I_{C}
S2: I_{M} = I_{B} + I_{C} = - I_{A}
S3: I_{M} = 0, das heißt keine Aussage möglich
S4: I_{M} = I_{B} + I_{C} = - I_{A}
S5: I_{M} = I_{C}
S6: I_{M} = 0, das heißt keine Aussage möglich.

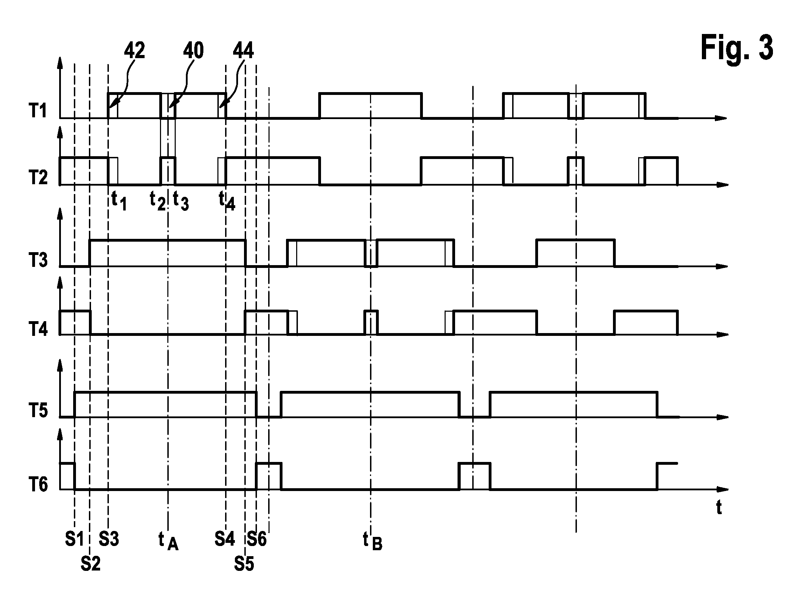

Da die Schaltzustände S1, S2, S4, S5 in der Regel wesentlich kürzer sind als die Schaltzustände S3, S6 bedeutet dies, dass sich die Messungen der Phasenströme I_{A}, I_{B}, I_{C} nur in sehr kleinen Zeitfenstern durchführen lässt, wobei die Zeitfenster oftmals so klein sind, dass eine zuverlässige Messung gar nicht möglich ist. Daher können zusätzlich Messschaltvorgänge durchgeführt werden, die anhand der Figur 3 näher erläutert werden.

In der Figur 3 sind die zeitlichen Verläufe der Schaltzustände der Transistoren T1 bis T6 als Ausführungsbeispiel dargestellt, wenn sowohl Betriebsschaltvorgänge als auch Messschaltvorgänge durchgeführt werden. Die Abszisse ist eine Zeitachse, und der jeweilige Schaltzustand ist entlang der Ordinate abzulesen. Dabei bedeutet ein niedriger Wert (erster Pegel), dass der jeweilige Transistor sperrt, während ein hoher Wert (zweiter Pegel) ein Leiten des Transistors anzeigt. Anhand einer zusätzlichen dünnen Linie wird angedeutet, wie sich der zur Figur 2 beschriebene Verlauf ergeben würde, also ohne Messschaltvorgänge.

Für die Erläuterungen sei angenommen, dass ein Ein- beziehungsweise Abschalten der Transistoren einer Schaltanordnung 14 tatsächlich zeitgleich erfolgen kann, ohne einen Kurzschlussstrom auszulösen, das heißt die zuvor erwähnten Totzeiten werden hier nicht betrachtet. Selbstverständlich kann deren Berücksichtigung in bekannter Weise durch ein Versetzen der jeweiligen Schaltflanken erfolgen. Anhand der Schaltvorgänge der Transistoren T1 und T2 zu den Zeitpunkten t1, t2, t3, t4 wird nun das Prinzip der Phasenstrommessung erläutert. Zum Zeitpunkt t = 0 sperrt Transistor T1 und leitet Transistor T2 bis zum Zeitpunkt t1, an dem Transistor T1 leitend und Transistor T2 sperrend geschaltet werden. Im Hinblick auf die zuvor zur Figur 2 dargestellten Schaltzustände der gesamten Anordnung, liegt nun der Schaltzustand S3 vor. Zum Zeitpunkt t2 wird nun der Messschaltvorgang eingeleitet. Dazu werden die Schaltzustände der Transistoren T1, T2 invertiert, das heißt T1 wird sperrend und T2 leitend geschaltet. Dadurch stellt sich die Situation ein, dass der Phasenstrom I_{A} zur elektrischen Maschine 10 fließt, von dort wieder als - I_{B} - I_{C} = I_{A} herausfließt und schließlich in der Zusammenführungsleitung 30 mündet. Der Phasenstrom I_{A} kann dort mittels der Messvorrichtung 34 ermittelt werden. Im Hinblick auf das Ende des Messvorgangs zum Zeitpunkt t3, wird die Strommessung in der zeitlichen Mitte zwischen dem Zeitpunkt t2 und dem Zeitpunkt t3, das heißt in der Mitte des Messschaltvorgangs, durchgeführt. Der Zeitpunkt der Strommessung ist mittels der gestrichelten Linie angedeutet. Der Messschaltvorgang liegt in der Mitte der Zeitdauer des Schaltzustands S3, das heißt in der zeitlichen Mitte der Zeitpunkte t1 und t4. Die Zeitdauer des Messschaltvorgangs wird so kurz wie möglich gehalten, um die Auswirkungen auf den Betrieb der elektrischen Maschine 10 und gegebenenfalls die notwendige Kompensation so gering wie möglich zu halten.

Im Vergleich zu dem mit der dünnen Linie dargestellten Verlauf, das heißt ohne einen Messschaltvorgang, ist zu erkennen, dass der Schaltvorgang zum Zeitpunkt t1 bei Durchführung des Messschaltvorgangs etwas früher erfolgt und der Schaltvorgang zum Zeitpunkt t4 etwas später erfolgt. Das heißt, der Schaltzustand S3, in dem die elektrische Maschine 10 nicht von Strom durchflossen ist, wird etwas früher eingeleitet und etwas später beendet. Diese Verschiebungen der Schaltzeitpunkte dienen der Kompensation des Messschaltvorgangs. Während des Messschaltvorgangs fließt ein zusätzlicher Strom durch die elektrische Maschine 10, der aber für den Betrieb der Maschine 10 nicht erforderlich ist, ja sogar die Effizienz des Betriebs verringern könnte. Dieser zusätzliche Stromfluss wird dadurch kompensiert, dass der Stromfluss durch die Verschiebung der Schaltvorgänge an anderer Stelle unterdrückt wird. Es ist dabei zu erkennen, dass die Fläche 40, die sich während des Messschaltvorgangs im Vergleich zu der dünnen Linie ergibt, in etwa gleich ist, wie die Summe der Flächen 42, 44, die sich aufgrund der Verschiebung der Schaltzeitpunkte t1, t4 ergeben. Zum Zeitpunkt t_{A} wird der Phasenstrom I_{A} bestimmt. War bereits im Vorfeld der Phasenstrom I_{B} bestimmt worden und insbesondere in einer Speichervorrichtung zwischengespeichert worden, so ergibt sich auch unmittelbar der Phasenstrom I_{C} = - I_{A} - I_{B}.

Wie weiter aus Figur 3 ersichtlich ist, wird im weiteren Verlauf nun ein Messschaltvorgang mittels der Transistoren T3, T4 durchgeführt. Dabei lassen sich die vorstehend gemachten Erläuterungen analog anwenden. Zum Zeitpunkt t_{B} wird demnach der Phasenstrom I_{B} bestimmt. Wurde der Phasenstrom I_{A} zwischengespeichert, so ergibt sich wiederum der Phasenstrom I_{C} = - I_{A} - I_{B}.

In diesem Ausführungsbeispiel werden die Messschaltvorgänge immer zum gleichen Zeitpunkt in der Taktperiode durchgeführt, so dass der Messzeitpunkt synchron zur PWM-Periode ist. Dies vereinfacht die Auswertung. Es wurde dabei erkannt, dass die Auswirkung der Messschaltvorgänge auf das Tastverhältnis - insbesondere bei Sinusbestromung - leicht kompensiert werden kann, wenn das ursprüngliche Tastverhältnis zwischen der Zeitdauer des Messschaltvorgangs und der Differenz aus Taktperiodendauer und Zeitdauer des Messschaltvorgangs liegt.

Bei der Erzeugung der PWM-Signale DC_{A}, DC_{B}, DC_{C}, sollte berücksichtigt werden, dass die Maschinensteuervorrichtung 12 für die Ansteuerung der Transistoren T1 bis T6 nicht beliebig kleine Impulse erzeugen kann und dass die Transistoren T1 bis T6 bestimmte bauteilabhängige Schaltzeiten aufweisen. Zur Ansteuerung der Transistoren T1 bis T6 umfasst die Maschinensteuervorrichtung 12 beispielsweise einen Brückentreiber. Diese zeitlichen Begrenzungen können als minimales Tastverhältnis MinDC und maximales Tastverhältnis MaxDC bezeichnet werden.

Zur Ansteuerung der Transistoren T1 bis T6 kann die Maschinensteuervorrichtung 12 über den Brückentreiber bei 20kHz normalerweise PWM-Signale DC_{A}, DC_{B}, DC_{C} mit einem maximalen Tastverhältnis MaxDC von 96% und mit einem minimalen Tastverhältnis MinDC von 4% erzeugen. Umfasst die Maschinensteuervorrichtung 12 eine Ladungspumpe dann kann auch ein Tastverhältnis von 100% erzeugt werden. Zudem kann auch ein Tastverhältnis von 0% erzeugt werden. Wegen der Transistorschaltzeiten ist es jedoch nicht möglich PWM-Signale DC_{A}, DC_{B}, DC_{C} mit einem Tastverhältnis im Bereich von 0 bis 4% zu erzeugen und durch die Begrenzung des Brückentreibers können keine PWM-Signale DC_{A}, DC_{B}, DC_{C} mit einem Tastverhältnis im Bereich von 96 bis 100% erzeugt werden.

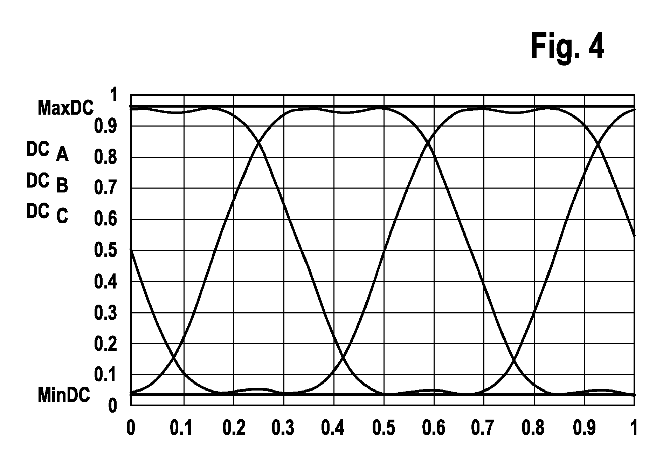

Die PWM-Signale DC_{A}, DC_{B}, DC_{C} werden normalerweise mit einem Modulationsverfahren erzeugt, z.B. einer Raumzeigermodulation (Space-Vector-Modulation) oder einer Dritte-Harmonische-Modulation. Die PWM-Signale können bei einer entsprechenden Ansteuerung jedoch auch sinusförmig sein. Fig. 4 zeigt PWM-Signale DC_{A}, DC_{B}, DC_{C}, welche mit der Dritte-Harmonische-Modulation erzeugt werden und welche innerhalb eines Tastverhältnisbereichs zwischen MinDC und MaxDC verlaufen. Aus den bisherigen Ausführungen ergibt sich, dass Spannungsverluste durch die Testimpulsbreite DC_{Test} innerhalb des Tastverhältnisbereichs zwischen MinDC und MaxDC kompensiert werden können. Bei großen Tastverhältnissen im Bereich von MaxDC minus Testimpulsbereite DC_{Test} und bei kleinen Tastverhältnissen im Bereich von MinDC plus Testimpulsbreite DC_{Test} können jedoch Probleme auftreten. Somit können sich beispielsweise bei einem minimalen Tastverhältnis von MinDC = 4%, einem maximalen Tastverhältnis MaxDC = 96% und einer Testimpulsbreite DC_{Test} = 4% im Bereich von 4 bis 8% und im Bereich von 92 bis 96% Probleme ergeben. Dadurch würde das effektive Tastverhältnis mit Kompensation, in der gemessenen Phase auf einen Bereich zwischen 92% und 8% begrenzt. Da für einen Reglerzyklus mindestens zwei der drei Phasenströme I_{A}, I_{B}, I_{C} gemessen werden, werden im dargestellten Ausführungsbeispiel nachfolgend angegebene Regeln bei den Tastverhältnissignalen DC_{A}, DC_{B}, DC_{C} eingehalten. Die Tastverhältnissignale liegen im Bereich von MinDC bis MaxDC und die Testimpulsbreite DC_{Test} ist größer oder gleich dem minimalen Tastverhältnis MinDC. Für alle nachfolgenden Ausführungen gilt:
x = A, B oder C; y = A, B oder C; z = A, B oder C; x ≠ y ≠ z

Um den Phasenstrom -Iₓ zu messen wird der Testimpuls auf dem Tastverhältnissignal DCₓ erzeugt, wobei gilt:
DCₓ: DCₓ + DC_{Test} < MaxDC; DCₓ > 2 * MinDC oder DCₓ = 0
DC_{y}: DC_{y} > DC_{Test}
DC_{z}: DC_{z} > DC_{Test}

Um den Phasenstrom Iₓ zu messen wird der Testimpuls auf den Tastverhältnissignalen DC_{y} und DC_{z} erzeugt, wobei gilt:
DCₓ: DCₓ > DC_{Test}
DC_{y}: DC_{y} + DC_{Test} < MaxDC; DC_{y} > 2 * MinDC oder DC_{y} = 0
DC_{z}: DC_{z} + DC_{Test} < MaxDC; DC_{z} > 2 * MinDC oder DC_{z} = 0

Zur Messung von zwei aufeinander folgenden Phasenströmen stehen mit entsprechenden Beschränkungen die folgenden Kombinationen zur Verfügung:
A. Messen von ―Iₓ und ―I_{y} : 2 Testimpulse erforderlich
DCₓ: DCₓ + DC_{Test} < MaxDC; DCₓ > 2 * MinDC; DCₓ > DC_{Test}
DC_{y}: DC_{y} + DC_{Test} < MaxDC; DC_{y} > 2 * MinDC; DC_{y} > DC_{Test}
DC_{z}: DC_{z} > DC_{Test}

B. Messen von ―Iₓ und I_{y} : 1 Testimpuls erforderlich, wenn DCₓ=0 bzw. 2 oder 3 Testimpulse erforderlich
DCₓ: DCₓ + DC_{Test} < MaxDC; DCₓ > 2 * MinDC; oder DCₓ = 0
DC_{y}: DC_{y} > DC_{Test}
DC_{z}: DC_{z} + DC_{Test} < MaxDC; DC_{z} > 2 * MinDC; DC_{z} > DC_{Test}

C. Messen von Iₓ und I_{y} : 2 oder 4 Testimpulse erforderlich
DCₓ: DCₓ + DC_{Test} < MaxDC; DCₓ > 2 * MinDC; DCₓ > DC_{Test}
DC_{y}: DC_{y} + DC_{Test} < MaxDC; DC_{y} > 2 * MinDC; DC_{y} > DC_{Test}
DC_{z}: DC_{z} + DC_{Test} < MaxDC; DC_{z} > 2 * MinDC; oder DC_{z} = 0

Die Kombination C ist keine gute Lösung, da das größte Tastverhältnissignal DCₘₐₓ kleiner als das maximale Tastverhältnis MaxDC minus dem Wert des Testimpulssignals DC_{Test} ist, d.h. Max (DCₓ, DC_{y}, DC_{z}) < MaxDC - DC_{Test}. Weist eines der Tastverhältnissignale DCₓ, DC_{y}, DC_{z} den Wert 0 auf, dann sind die Bedingungen bei Kombination B günstiger, da nur 1 Testimpuls erforderlich ist. In den anderen Fällen ist die Kombination A günstiger. Zur Messung von zwei aufeinander folgenden Phasenströmen führen diese Regeln zur Begrenzung der Tastverhältnissignale DCₓ, DC_{y}, DC_{z}, wodurch gleichzeitig auch die maximale Ausgangsspannung des Wechselrichters begrenzt wird.

Um diese Begrenzungen zu vermeiden wird der Sternpunkt der elektrischen sterngeschalteten Wechselstrommaschine 10 so verschoben, dass wieder mehr Spannung über einer Phase zur Verfügung steht. Zur Sternpunktverschiebung wird das minimale Tastverhältnissignal DCₘᵢₙ bestimmt und mit einem vorgegebenen Grenzwert GW verglichen. Unterschreitet das minimale Tastverhältnissignal DCₘᵢₙ den vorgegebenen Grenzwert GW, dann wird das ermittelte minimale Tastverhältnissignal DCₘᵢₙ auf den Wert Null reduziert. Die anderen Tastverhältnissignale werden um den vorgegebenen Grenzwert GW reduziert. Der Grenzwert GW entspricht beispielsweise dem Testimpulswert DC_{Test} oder dem zweifachen minimalen Tastverhältnis MinDC, d.h. die Sternpunktverschiebung wird durchgeführt, wenn die Bedingungen DCₘᵢₙ < DC_{Test} oder DCₘᵢₙ < 2 * MinDC erfüllt sind.

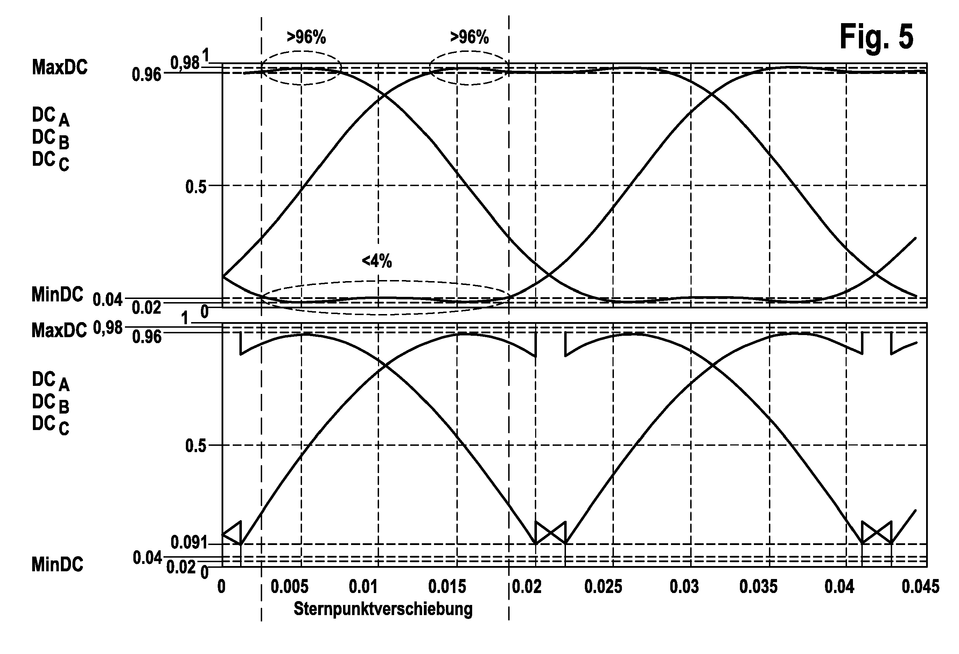

Zur Bestimmung des minimalen Tastverhältnissignals DCₘᵢₙ und/oder des maximalen Tastverhältnissignals DCₘₐₓ werden die Tastverhältnissignale DCₓ, DC_{y}, DC_{z} nach ihrer Größe angeordnet, wobei bei der dreiphasigen Ausführung der Wechselstrommaschine in Abhängigkeit von der sich ergebenden Anordnungsreihenfolge sechs gültige Zustände unterschieden werden können. Für einen ersten Zustand gilt: DC_{z} > DC_{y} > DCₓ, somit entspricht das Tastverhältnissignal DCₓ dem minimalen Tastverhältnissignal DCₘᵢₙ. Für einen zweiten Zustand gilt: DC_{y} > DC_{z} > DCₓ, somit entspricht das Tastverhältnissignal DCₓ dem minimalen Tastverhältnissignal DCₘᵢₙ. Für einen dritten Zustand gilt: DC_{y} > DCₓ > DC_{z}, somit entspricht das Tastverhältnissignal DC_{z} dem minimalen Tastverhältnissignal DCₘᵢₙ. Für einen vierten Zustand gilt: DC_{z} > DCₓ > DC_{y}, somit entspricht das Tastverhältnissignal DC_{y} dem minimalen Tastverhältnissignal DCₘᵢₙ. Für einen fünften Zustand gilt: DCₓ > DC_{z} > DC_{y}, somit entspricht das Tastverhältnissignal DC_{y} dem minimalen Tastverhältnissignal DCₘᵢₙ. Für einen sechsten Zustand gilt: DCₓ > DC_{y} > DC_{z}, somit entspricht das Tastverhältnissignal DC_{z} dem minimalen Tastverhältnissignal DCₘᵢₙ. In Abhängigkeit vom bestimmten aktuellen Zustand und vom vorherigen Phasenstrom wird der zu messende Strom festgelegt. Nach der Bestimmung des zu messenden Phasenstroms werden die kompensierten Tastverhältnissignale DCₓ, DC_{y}, DC_{z} zur Ansteuerung eines Leistungsverstärkers der Wechselstrommaschine 10 berechnet und ausgegeben. Figur 5 zeigt in einer oberen Darstellung die Tastverhältnissignale DCₓ, DC_{y}, DC_{z} ohne Sternpunktverschiebung mit einer effektiven Strangspannung mit einer Amplitude von 0,55 * V_{DC}. Ohne die Sternpunktverschiebung sind die Tastverhältnissignale DCₓ, DC_{y}, DC_{z} außerhalb des Tastverhältnisbereichs zwischen MinDC und MaxDC, d.h. außerhalb der Brückentreibergrenzen. Daher wird die Amplitude der Phasenspannung ohne Sternpunktverschiebung auf 0,53 * V_{DC} begrenzt. Die untere Darstellung aus Figur 5 zeigt die Tastverhältnissignale DCₓ, DC_{y}, DC_{z} mit Sternpunktverschiebung bei gleicher effektiver Strangspannung mit der Amplitude von 0.55 * V_{DC}. Durch die Sternpunktverschiebung wird das minimale Tastverhältnissignal DCₘᵢₙ in dem Bereich auf Null reduziert, in welchem das minimale Tastverhältnissignal DCₘᵢₙ den Testimpulswert DC_{Test} von 4% unterschreitet. Durch die Sternpunktverschiebung werden auch die anderen Tastverhältnissignale um den Grenzwert GW von 4% reduziert, wodurch die anderen Tastverhältnissignale in den Tastverhältnisbereich zwischen MinDC und MaxDC, d.h. in den Brückentreiberbereich, verschoben werden. Durch die Sternpunktverschiebung ist eine Amplitude von 0,55 * V_{DC} möglich. Außerdem ist die Phasenstrommessung mit Kompensation in zwei Phasen immer möglich.

## Patentansprüche

**1.** Verfahren zur Bestimmung mindestens eines Phasenstroms (I_{A}, I_{B}, I_{C}) bei einer elektrischen sterngeschalteten Wechselstrommaschine (10) mit einer Maschinensteuervorrichtung (12), insbesondere für ein Kraftfahrzeug, aufweisend mehrere jeweils einer Phase zugeordnete Schaltanordnungen (14) mit jeweils mindestens einem Schaltelement (16), wobei die Maschinensteuervorrichtung (12) mittels Betriebsschaltvorgängen die Schaltanordnungen (14) derart schaltet, dass zumindest zeitweise mindestens ein Phasenstrom (I_{A}, I_{B}, I_{C}) zur Maschine (10) geleitet wird, um den Betrieb der Maschine (10) zu bewirken, **dadurch gekennzeichnet, dass** neben den den Betrieb der Maschine (10) bewirkenden Betriebsschaltvorgängen mindestens ein weiterer der Bestimmung des Phasenstroms dienender Messschaltvorgang mittels mindestens einer der Schaltanordnungen (14) durchgeführt wird, wobei für den Messschaltvorgang zur Erzeugung eines den zu messenden Phasenstrom bestimmenden Testimpulssignals (DC_{Test}) aktuelle Tastverhältnissignale (DC_{A}, DC_{B}, DC_{C}) ausgewertet und miteinander verglichen werden.

**2.** Verfahren nach Anspruch 1, **dadurch gekennzeichnet, dass** ein minimales Tastverhältnissignal (DCₘᵢₙ) bei der Auswertung der Tastverhältnissignale (DC_{A}, DC_{B}, DC_{C}) bestimmt wird.

**3.** Verfahren nach Anspruch 1 oder 2, **dadurch gekennzeichnet, dass** ein maximales Tastverhältnissignal (DCₘₐₓ) bei der Auswertung der Tastverhältnissignale (DC_{A}, DC_{B}, DC_{C}) bestimmt wird.

**4.** Verfahren nach Anspruch 2 oder 3, **dadurch gekennzeichnet, dass** zur Bestimmung des minimalen Tastverhältnissignals (DCₘᵢₙ) und/oder des maximalen Tastverhältnissignals (DCₘₐₓ) die Tastverhältnissignale (DC_{A}, DC_{B}, DC_{C}) nach ihrer Größe angeordnet werden und in Abhängigkeit von der Anordnungsreihenfolge verschiedene Zustände erkannt werden.

**5.** Verfahren nach einem der Ansprüche 2 bis 4, **dadurch gekennzeichnet, dass** das minimale Tastverhältnissignal (DCₘᵢₙ) mit einem vorgegebenen Grenzwert (GW) verglichen wird, wobei das minimale Tastverhältnissignal (DCₘᵢₙ) auf einen vorgegebenen Wert, vorzugsweise Null, reduziert wird und die anderen Tastverhältnissignale um den vorgegebenen Grenzwert reduziert werden, wenn das minimale Tastverhältnissignal (DCₘᵢₙ) den vorgegebenen Grenzwert unterschreitet.

**6.** Verfahren nach Anspruch 5, **dadurch gekennzeichnet, dass** der vorgegebene Grenzwert (GW) auf den Wert des Testimpulssignals (DC_{Test}) oder einen doppelten Wert eines minimalen Tastverhältnisses (MinDC) gesetzt wird.

**7.** Verfahren nach einem der Ansprüche 4 bis 6, **dadurch gekennzeichnet, dass** der zu messende Phasenstrom (I_{A}, I_{B}, I_{C}) in Abhängigkeit vom vorherigen Phasenstrom (I_{A}, I_{B}, I_{C}) und vom erkannten Zustand bestimmt wird.

**8.** Verfahren nach Anspruch 7, **dadurch gekennzeichnet, dass** kompensierte Tastverhältnissignale (DC_{A}, DC_{B}, DC_{C}) berechnet und ausgegeben werden.

**10.** Vorrichtung (1) zur Bestimmung mindestens eines Phasenstroms (I_{A}, I_{B}, I_{C}) bei einer elektrischen sterngeschalteten Wechselstrommaschine (10) mit einer Maschinensteuervorrichtung (12), insbesondere für ein Kraftfahrzeug, aufweisend mehrere jeweils einer Phase zugeordnete Schaltanordnungen (14) mit jeweils mindestens einem Schaltelement (16), wobei die Maschinensteuervorrichtung (12) mittels Betriebsschaltvorgängen die Schaltanordnungen (14) derart schaltet, dass zumindest zeitweise mindestens ein Phasenstrom (I_{A}, I_{B}, I_{C}) zur Maschine (10) geleitet wird, um den Betrieb der Maschine (10) zu bewirken, wobei die Vorrichtung (1) eine Messeinrichtung (34) aufweist, **gekennzeichnet durch** eine neben den den Betrieb der Maschine (10) bewirkenden Betriebsschaltvorgängen mindestens einen der Bestimmung des Phasenstroms dienenden Messschaltvorgang durchführende Messschaltvorrichtung (38), welche für den Messschaltvorgang zur Erzeugung eines den zu messenden Phasenstrom bestimmenden Testimpulssignals (DC_{Test}) aktuelle Tastverhältnissignale (DC_{A}, DC_{B}, DC_{C}) auswertet.

**11.** Vorrichtung (1) nach Anspruch 10, **dadurch gekennzeichnet, dass** ein Messelement (32) der Messeinrichtung (34) in einer Zusammenführungsleitung (30) aller Phasen angeordnet ist.

**12.** Vorrichtung (1) nach Anspruch 10 oder 11, **dadurch gekennzeichnet, dass** die Messeinrichtung (34) einen Messwiderstand (36), insbesondere einen Shunt, aufweist.

**13.** Vorrichtung (1) nach einem der Ansprüche 10 bis 12, **dadurch gekennzeichnet, dass** die Schaltanordnungen (14) jeweils zwei Schaltelemente (16) aufweisen.

**14.** Vorrichtung (1) nach Anspruch 13, **dadurch gekennzeichnet, dass** die Schaltelemente (16) ihre Schaltzustände gegenläufig zueinander wechseln.
